# EUROPEAN PATENT APPLICATION

(11) **EP 4 386 570 A1**
(43) Date of publication of application: **19.06.2024**
(21) Application number: 22213609.5
(22) Date of filing: 14.12.2022
(51) Int. Cl.: G06F 13/42, G06F 13/38, G06F 13/40, H04L 12/40, H04B 1/58, H04M 19/00

(54) **IMPROVED CIRCUIT INTEGRATION**

(71) Applicant: Televic Rail, 8870 Izegem (BE)
(72) Inventor: Vandekerckhove, Sander, 8710 Ooigem (BE)
(74) Representative: Rogiest, Wouter

(57) **Abstract**

The invention provides, amongst other aspects, a device (2) comprising: an I2C path section (120, 120') for realizing a path (72) toward an application processor (10) and a further device (3); a local I2C module (204) connected to local I2C circuitry (30, 74) via a two wire, 2W, connection (3000); wherein the I2C path section (72) is provided as four wire, 4W, connection (1200, 1200'); wherein the local I2C module (204) comprises a static voltage offset means (73) for converting between unidirectional signals carried over said path (72, 1200, 1200') and bidirectional signals carried over said 2W connection (3000) toward the local I2C circuitry (30, 74).

## Description

### Field of the invention

The present invention relates to improved circuit integration involving 12C. Particularly, the invention relates to circuit integration for connection between the 12C interface of an application processor and 12C circuitry.

### Background art

State of the art application processors are commonly provided with an 12C interface for connection to one or more 12C slave devices. Given the popularity of such interface, 12C provides a robust and convenient means for processor interfacing. However, any 12C system with multiple devices is also prone to the common limitations of 12C with respect to extendibility. This may relate to problems of parasitic long wires, signal bouncing, signal integrity, EMI susceptibility, IO pin limitations.

Additionally, 12C is restricted by limited address space, giving rise to issues with duplicate addresses.

Several approaches have been proposed to tackle these challenges, but only do so partially, thereby suffering from larger footprint and/or larger bill of materials (e.g., owing to discrete implementation) and/or lack of modularity and/or lack of flexibility.

US20170222829A1, CN113448402A, and WO2015195329A2 disclose related methods and devices but are overly complex and/or lack flexibility.

The present invention aims at addressing issues, such as the issues mentioned above.

### Summary of the invention

According to a first aspect, the present invention provides a device, preferably an extension module, comprising:
an 12C path section for realizing a path toward an application processor and a further device;
a local 12C module connected to local 12C circuitry via a two wire, 2W, connection;
wherein the 12C path section is provided as four wire, 4W, connection;
wherein the local 12C module comprises a static voltage offset means for converting between unidirectional signals carried over said path and bidirectional signals carried over said 2W connection toward the local 12C circuitry.

In embodiments, relating to the system according to the invention, the device is an extension module that provides an extension with respect to a base module comprising said application processor, wherein the base module and extension module are separate modules preferably connectable via a connector. The device may thereby communicate with the application processor, on the one hand, and the further device, on the other hand. In embodiments, at least one of the application processor and the further device does not belong to the device. In preferred embodiments, neither the application processor nor the further device belongs to the device. In related embodiments, the further device is another separate module preferably being a second extension module connectable to the extension module which, in its turn, is connectable to the base module comprising the application processor, the modules preferably being connectable by means of respective connectors.

In preferred embodiments, the 12C path section provided as 4W connection comprises two respective wires carrying two respective unidirectional signals toward the application processor and two respective wires carrying two respective unidirectional signals away from the application processor.

In preferred embodiments, said path comprising four wires carries two respective unidirectional signals toward the application processor over two respective wires, and two other respective unidirectional signals away from the application processor over the other respective two wires.

A variety of advantages of such a device may relate to the modular architecture provided by the 4W unidirectional signal transmission, which may be described as a unidirectional push-pull interface. Thereby, the static voltage offset means enable a transparent conversion between the 2W bidirectional signals of the processor and the local 12C circuitry, on the one hand, and the 4W unidirectional signal transmission in-between. It may advantageously allow to bridge the distances between devices and processor while maintaining signal integrity. As may be understood by the skilled person, maintaining signal integrity over traditional 2W 12C connections requires complex hardware, whereas 4W unidirectional signals may suffer less EMI susceptibility and, crucially, may be "cleaned up" at the level of each device by means of simple unidirectional signal repeaters, allowing to operate in environments that are more challenging and/or more electronically "dirty", relating to larger distances and/or more EMI. Thereby, communication between the application processor, the device, and a certain number of further devices may be possible over increased distance. The architecture thereby affords to choose the number of further devices according to user requirements, enabling modularity.

Related, the transparent conversion between the 2W bidirectional signals and the 4W unidirectional signals conveniently enables that the application processor may have the local 12C circuitry at the device(s) available as if they were attached directly to the processor's 2W 12C interface. This, in turn, may allow that the OS of the processor uses the device drivers supplied by the manufacturer of the local 12 circuitry (e.g., one or more slave devices), without any need for customisation of these drivers or extra middleware, and hence, without the risk of seeing system performance reduced owing to such customized drivers or middleware. This transparency may be enabled by the advantageous conversion, by the static voltage offset means, between 2W bidirectional signals a 4W unidirectional signals.

Furthermore, the invention may advantageously mitigate the problems of parasitic long wires, signal bouncing, signal integrity, EMI susceptibility, and IO pin limitations.

In embodiments, issues with duplicate addresses may be overcome through address translation.

According to a second aspect, the invention provides a system comprising:
a base module comprising:
   · an application processor comprising a two wire, 2W, 12C interface;
   · second static voltage offset means for converting between bidirectional signals of said 2W 12C interface of the application processor and 4W unidirectional signals;
one or more devices, each device comprising:
   · a 4W 12C path section for realizing a path toward the 4W unidirectional signals originating from the application processor and another one of the one or more devices;
   · a local 12C module connected to local 12C circuitry via a two wire, 2W, connection, comprising a static voltage offset means for converting between the 4W unidirectional signals carried over said path and bidirectional signals carried over said 2W connection toward the local 12C circuitry.

The system may provide the advantages of the device comprised in it. Moreover, it may provide additional advantages relating the base module. Particularly, the base module may be produced at reduced cost in view of not requiring application specific components such as specific 12C bus extenders, such as prior art approaches converting the single-ended 12C bus to a different type of signal type (e.g., PCA9615, or 12C to LVDS, or analog device's A2B) or very specific implementations (e.g., those based on LVDS technology using a dedicated FPGA translating register mapped IO and digital audio to an LVDS bus). Instead, the second static voltage offset means may relate to a simple, inexpensive pair of transistors. Also, for the base module the extension interface pin count may be kept low. This relates at least to the 12C interface that is guided via the path, preferably at least for control-related 12C signals, and, in embodiments, may also relate to using buses for IO and/or audio (TDM). Furthermore, by enabling using native processor interfaces (I2C, optionally also TDM, ...) and thereby using them as intended (e.g., attaching 12C IO extenders to it using the standard device drivers) the software development may be reduced and/or robust and fast operation may be attained. This may be contrasted with prior art devices which require specific implementation in the processor.

According to a further aspect, the invention provides a method for configuring a system comprising a base module and one or more devices each comprising a configurable module and a self-configuration engine; the method comprising the steps of:
providing, to each of the devices, different respective configuration instructions for storage on a respective EEPROM module comprised in the respective device,
connecting a 4W path section of the first device to the base module, and each 4W path section of the respective further device to the 4W path section of the respective previous device, so that a path is realized toward an application processor comprised in the base module; said path relating to second static voltage offset means comprised in the base module that convert between 4W unidirectional signals of the path and bidirectional signals of an 2W 12C interface of the application processor;
have the self-configuration engine, based upon a trigger for self-configuration, carry out the steps of:
   · loading the configuration instructions from the EEPROM module; and
   · configuring, based on the instructions, the configurable module, the configurable module preferably relating to one or more of: an address translation module, a TDM multiplexer module, an 12C IO extender, an SPI chip select module, a UART chip select module.

Such a method may have advantages similar to the device and the system according to the invention.

Preferred embodiments and their advantages are provided in the description and the dependent claims.

### Brief description of the drawings

The present invention will be discussed in more detail below, with reference to the attached drawings.
**Figure 1** shows a first example device as part of a first example system according to the invention.
**Figure 2** shows a second example device according to the invention.
**Figure 3** shows a third example device as part of a third example system according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "extension module" refers to the device of the invention, whereby the term "extension" should not be construed as limiting the device in any way, and refers to one possible use of the device, connecting it to a base module. However, it should be noted that in some embodiments the application processor of the invention may also reside within the device, without any base module being present, illustrating that the term "extension" should not be construed as limiting. Likewise, the term "extension" may also refer to the address space extension enabled through the address translation module, although both embodiments of the device with and without address translation module fall within the scope of the invention.

In this document, reference is made to 4W signals carrying data originating from 2W 12C interfaces. In (PCA9615 Product data sheet, 2-channel multipoint Fast-mode Plus differential 12C-bus buffer with hot-swap logic, Rev. 2 - 16 September 2021, see, e.g., https://www.nxp.com/docs/en/data-sheet/PCA9615.pdf, hereafter PCA9615) there is also mention of "4W 12C", but not in any way compatible with the invention. Particularly, (PCA9615) does not disclose unidirectional signals but instead teaches two differential bidirectional pairs. This relates to the different aim of (PCA9615), directed at a multi-drop setup, teaching away from any form of 12C distribution means. In contrast, according to embodiments, the invention enables point-to-(repeated)-point with a T- connection.

In the context of the invention, static voltage offset may, e.g., relate to using two levels for the active state (for 12C the active state is low (~0V), since open drain outputs are used) on the 12C line, namely 'low of the 12C slave (e.g., 0V)' and 'low of the path (e.g., 0.5V)'. High may relate to a higher voltage level, e.g., 3.3V. Thereby, a comparator may detect the direction of the signal (driver of the active signal is the path or driver is the slave). Through the comparator, the direction may be known, and a lock-up condition may be prevented.

In this document, reference is made to static voltage offset means as a means for conversion between 2W and 4W. In (F. Houde; Why, When, and How to use 12C Buffers, TI Application report SCPA054 - July 2018, see, e.g., https://www.ti.com/lit/an/scpa054/scpa054.pdf, hereafter SCPA054) it is explained how an 12C buffer may benefit from static voltage offset. This said, (SCPA054) cannot disclose or suggest the invention, since it is directed merely at local buffering, and does not relate to providing transparency on a path toward an application processor, a device, and a further device.

The application processor may be any processor comprising an 12C interface, preferably a 2W 12C interface. In examples, the application processor is an i.MX 6 series processor with ARM 9 or ARM 7, yet any 12C-enabled application processor may be considered. Thereby, the 12C interface preferably allows to connect to a variety of slave devices, such as: memory, IO expanders, displays, sensors, ADCs, DACs, a GNSS such as GPS.

The advantages of the invention, in its various embodiments, may relate to overcoming one or more of the common limitations of: parasitic long wires, repeated addresses, signal bounce, signal integrity, IO pin limitations, and EMI susceptibility. Prior art approaches use discrete components that each solve a single limitation, but do not combine those in an integrated fashion, as is the case for the invention. For instance, in prior art devices, 4W 12C may allow longer lines through signal regeneration/repeating, which would be very difficult with 2W 12C, but is never proposed with a path according to the invention, connecting the application processor, a device, and a further device, wherein the path realizes a 4W "backbone". In other prior art examples, address translators enable address duplication, but are merely proposed for translation directly at the 12C interface of the processor. In other prior art examples, debouncers are provided yet are operating only at a local connection level, and not at system level. In other prior art examples, GPIO extenders allow for IO extension beyond the GPIO pins but are proposed merely at the application processor. Additionally, each of these discrete components add to the complexity of the design and to the bill of materials. The invention overcomes these drawbacks by means of an integrated solution with respect to 12C distribution. In embodiments, the invention enables an in - out principle per device (or extension module), allowing signals to be repeated or switched per device. This may facilitate achieving good signal integrity, whereby signals get cleaned up on each device, yielding reliable 12C distribution. In embodiments, the use of an FPGA combined with 4W 12C advantageously overcomes several physical limitations of the standard 2W 12C bus (e.g., addressing, capacitive load, EMI susceptibility).

In embodiments, the same FPGA may thereby be used to enable a highly compressed audio interface native to the CPU (16-channel TDM). Such an interface is often not supported by the electronics on the extension boards. In embodiments, the FPGA may perform the signal translation from 16-channel TDM to the commonly supported 12S through a simple programmable TDM multiplexer module. This module may, e.g., simply select the correct time slot. The distribution may be transparent to the processor, and even more so in embodiments relying on an FPGA. Transparency may thereby enable the reuse of default drivers.

In embodiments, the device further comprises: an 12C repeater module for unidirectional repeating of said unidirectional signals carried over said path being a 4W 12C path, preferably relating to respective submodules for: master in slave out (MISO) serial data (SDA); master out slave in (MOSI) SDA; master out slave in (MISO) serial clock (SCL); and MOSI SCL.

In embodiments, the device further comprises: an address translation module for providing address translation between a global address over said path and a local 12C address for the local 12C circuitry.

In embodiments, the address translation module is a 4W module connected to the 12C path section and the local 12C module.

In embodiments, the device further comprises: an EEPROM module, preferably an 12C EEPROM module, comprising configuration instructions; a self-configuration engine; a configurable module; wherein the self-configuration engine is configured to, upon a trigger for self-configuration, carry out the steps of: loading the configuration instructions from the EEPROM module; and configuring, based on the instructions, the configurable module, the configurable module preferably relating to one or more of: an address translation module, a TDM multiplexer module, an 12C IO extender, an SPI chip select module, a UART chip select module.

In embodiments, the device further comprises: a TDM multiplexer module; respective audio interfaces for connecting the TDM multiplexer module toward the application processor and the further device; an audio codec module, preferably an 12S audio codec module, connected to said TDM multiplexer module; wherein the TDM multiplexer module is configured for routing audio data between the audio interfaces and the audio codec module over a TDM time slot dedicated to said device, wherein preferably said TDM time slot is dedicated based on configuration instructions stored in an 12C EEPROM module comprised in the device.

In embodiments, the device further comprises: an 12C IO extender; user 12C IO circuitry connected to said IO extender; wherein said IO extender comprises an IO extender output and an IO extender input, preferably an IO extender input comprising a debouncer; wherein said IO extender is a 4W IO extender connected to said 12C path section via the address translation module for providing address translation between a global address over said path and the local 12C address for the user 12C IO circuitry. In related embodiments, the 12C IO extender is not a 4W but a 2W IO extender. In such embodiments, the 2W IO extender may, e.g., belong to the local 12C circuitry and interface with the address translation module and the 12C path section via the local 12C module.

In embodiments, the device further comprises: an SPI chip select module; an SPI multiplexer module connected to the SPI chip select module; local SPI circuitry connected to said SPI multiplexer module; respective SPI interfaces for connecting the SPI multiplexer module toward the application processor and the further device; wherein the SPI multiplexer module is configured for routing SPI data between an SPI interface and either the other SPI interface or the SPI local circuitry based on a switching determined by the SPI chip select module, wherein preferably said switching is based on configuration instructions stored on an EEPROM module comprised in the device.

In embodiments, the device further comprises: a UART chip select module; a UART multiplexer module connected to the UART chip select module; local UART circuitry connected to said UART multiplexer module; respective UART interfaces for connecting the UART multiplexer module toward the application processor and the further device; wherein the UART multiplexer module is configured for routing UART data between a UART interface and either the other UART interface or the UART local circuitry based on a switching determined by the UART chip select module, wherein preferably said switching is based on configuration instructions stored on an EEPROM module comprised in the device.

In embodiments, at least said 12C path section and said 12C repeater module are comprised in a same FPGA belonging to the device, wherein preferably the same FPGA further comprises one or one or more of, more preferably comprises each of: an address translation module, a TDM multiplexer module, an 12C IO extender, an SPI chip select module, a UART chip select module, a self-configuration engine. Such embodiments may advantageously provide ease of implementation of a variety of functions, afforded by the FPGA. In embodiments, this includes the implementation of the self-configuration engine 209. This functionality makes it possible to reuse the complete FPGA design without any alteration on the different devices (e.g., extension modules). In examples, multiple devices with the exact same hardware may be attached to the application module (e.g., base module), only requiring changing the respective configuration instructions stored on the respective EEPROM modules. The storing of configuration instructions may be performed, e.g., during device production. Moreover, owing to the transparency of the path, local 12C circuitry, e.g., attached slave devices, may be available to the application processor as if they were attached directly to the processor's peripheral interfaces themselves.

In embodiments, the addition of a further device, e.g., an extension module, is self-configuring. This may relate to the base unit detecting extension modules by itself and configuring itself to use them. To this end, an EEPROM present on the 12C circuitry on every extension module may define the type of extension module. This may create a problem with 12C addresses as EEPROM 12C addresses are very limited (an industry standard range of a small number, e.g., 8, addresses is used for 12C EEPROM's). Such a low number may mean that only this number of different extension modules could be designed. This may advantageously be overcome by the 12C address translation. Thereby, also the address translation mask may be defined in the EEPROM. This mask may be configured during production, making it possible to use twice the same extension module in hardware, attached to one base unit. At power on the FPGA may read out the address mask and then translate all local 12C addresses accordingly. This may allow that two of the same extension modules (hardware) configured with a different address mask show up as different extension modules to the base unit.

In embodiments, apart from the EEPROM, other 12C devices use the address translation, making it possible to reuse the same components (with the same addresses, e.g., 12C configurable audio codecs, 12C temperature sensors) on different extension modules. This may relate to said self-configuring.

In embodiments, TDM channel selection is also configured in the EEPROM. Preferably this is programmed with corresponding configuration instructions during production. This may tell the base unit which TDM audio slots the specific extension module uses (e.g., an extension module with 4 power amplifiers can be configured to use slots 1-4 (of the 16), the next extension module with, e.g., 2 microphones may be configured to use slots 5 & 6, the same extension module with another 2 mic inputs may be configured to use 7 & 8). The TDM slots may be demultiplexed (for DAC) and multiplexed (for ADC) on the extension board enabling to use codec devices using the standard 2-channel 12S digital audio protocol, which is widely supported.

In embodiments with an FPGA, the FPGA comprises said 12C repeater module consisting of respective submodules for MISO SDA, MOSI SDA, MISO SCL, and MOSI SCL. This may advantageously provide a reliable means of signal integrity maintenance that may be straightforward to implement.

In embodiments, the system comprises at least two respective devices each comprising a respective same configurable module each configured through respective configuration instructions stored in respective 12C EEPROM modules comprised in the respective device.

In embodiments relating to the system, said configuration relates to a respective self-configuration engine comprised in the respective device and configured to, upon a trigger for self-configuration, carry out the steps of: loading the configuration instructions from the respective 12C EEPROM module; and configuring, based on the instructions, the respective configurable module. Thereby, the trigger may preferably relate to, e.g., power on.

In embodiments, signals not relating to bus signals or 12C signals are also present on the interface of the device. This may relate, e.g., to one or more of:
▪ ETH: if used a switch may be provided in the device to make a Y-connection.
▪ USB: is used for programming the device in production via the easily reachable extension interface (not needed to screw open the device, unmount boards etc), if used for other purposes (e.g. a USB disk-on-module), whereby a local USB hub may be provided in the device to make a Y-connection.
▪ UART: may be used for debug purposes with easy access. In embodiments, e.g., with other or additional purposes, (e.g., RS485 connection), an UART multiplexer may be provided in the device to make a Y-connection.

In embodiments, redundant power is available through the extension interface. This makes it possible to power the extension modules from the base unit (redundantly: with 2 PSU's in the base unit) or to power the base unit with a specific PSU extension modules or a combination of both.

In embodiments, the application processor comprises a peripheral audio interface, preferably an 12S interface, comprising a plurality of multiplexed audio channels, and the respective data processing means at the extension module are implemented with respective FPGAs comprising a multiplexer/demultiplexer for adding/extracting at least one respective audio channel to/from the plurality of multiplexed audio channels. This may advantageously provide for integration of I2C-based functionality and audio functionality with the same (FPGA) hardware. In preferred embodiments, the number of multiplexed audio channels, e.g., TDM audio channels, is at least 8 or 16 channels, with at least one channel for input and one for output with respect to at least one extension module.

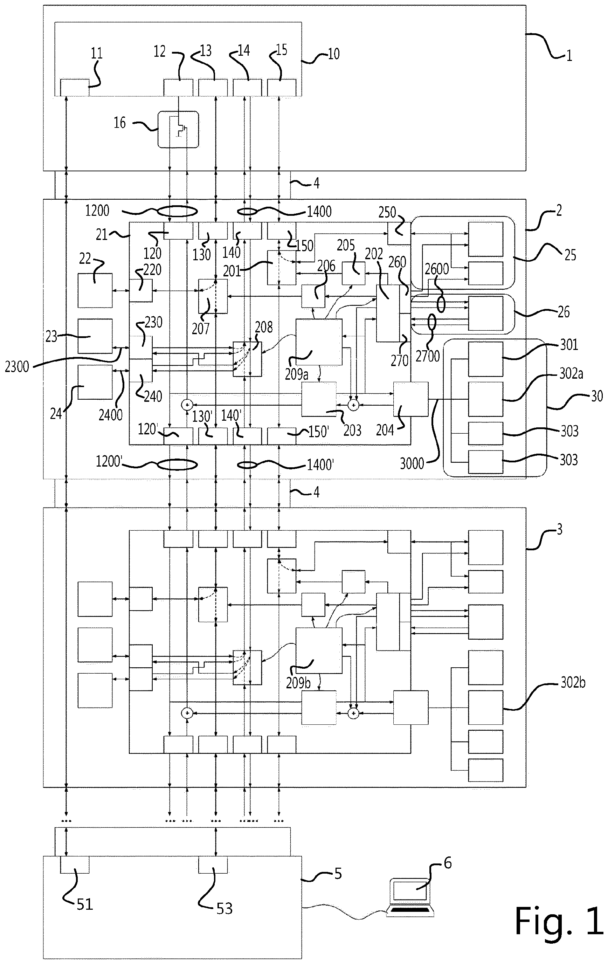

Example embodiments of the invention will be described with reference to Figs. 1-3.

### Example 1: first example device and system according to the invention

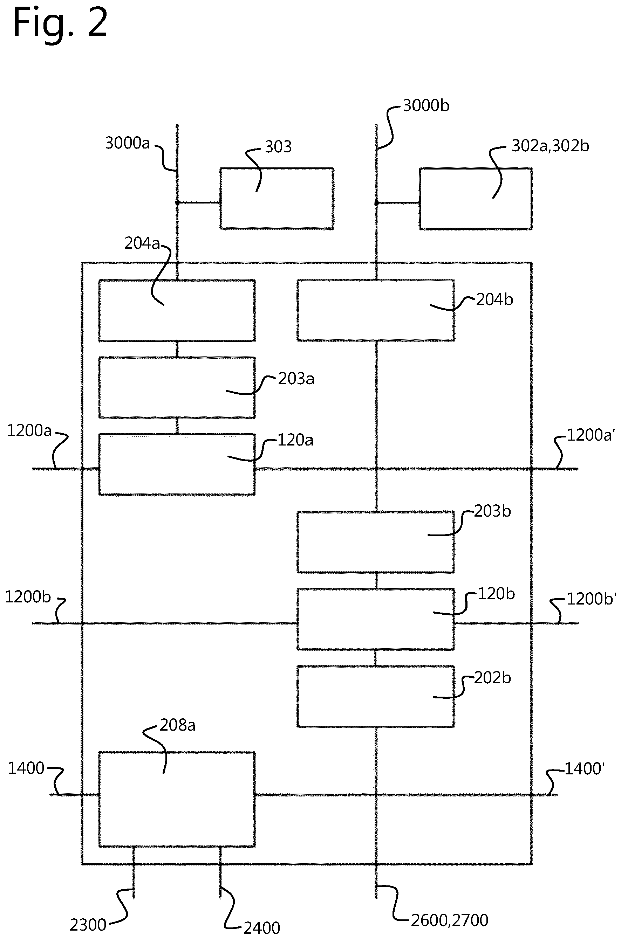

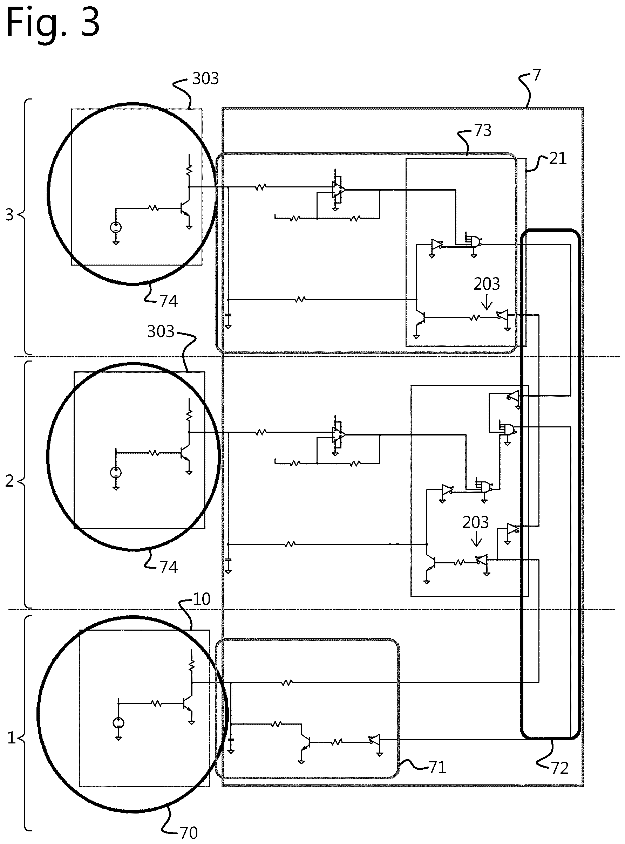

This example relates to Figure 1, showing a first example device being an extension module 2 as part of a first example system according to the invention. As shown, the system further comprises a further example device being a further extension module 3, and a base module 1 comprising the application processor 10. In view of similarities with Example 2 and 3, merely for the sake of clarity, reference numerals are included in this Example which occur only on Figure 2 or 3 and not on Figure 1. These reference numerals are however not to be construed as limiting the invention.

The extension module 2 comprises an 12C path section for realizing a path toward the application processor 10 and the further extension module 3. The path thereby extends between the base module 1 and a program and debug interface 5. Particularly, it extends from the base module 1 toward the extension module 2, and then from the extension module 2 toward the second extension module 3, via respective connectors 4. As shown (suggested by three dots), one or more further extension modules (not shown) may be connected likewise. At the end of the path is said program and debug interface 5, comprising a program interface 51 and a UART debug interface 53 for connecting via a connector. The program and debug interface 5 is configured to be attached to the extension module at the end of the path extending from the base module, or directly to the base module. Furthermore, the program and debug interface is connected to a user interface device 6 such as a PC, allowing to program and debug the system, particularly, program the processor 10 and communicate with it via a RS232 debug interface.

As illustrated by arrows indicating direction, with each depicted line representing two wires, the path comprises four wires. The path carries two respective unidirectional signals toward the application processor, over two respective wires (one depicted line, arrow pointing toward application processor). Furthermore, the path carries two other respective unidirectional signals away from the application processor, over the other respective two wires (the other depicted line, arrow pointing away from application processor).

The base module 1 comprises, apart from the application processor running some OS (e.g., Linux OS), a plurality of peripheral interfaces 11, 12, 13, 14, 15. The peripheral interfaces are, amongst others, for communicating with other IC's (I2C, SPI), small functional modules (SPI, UART) and audio devices (serial digital audio). Next to the on-board devices and user IO in the base module, the processor interfaces with the extension modules 2, 3.

Particularly, the base module comprises a program interface 11 of the processor, an 12C peripheral interface 12 of the processor, a UART peripheral interface 13 of the processor, a serial digital audio peripheral interface 14 of the processor, and an SPI peripheral interface 15 of the processor.

The program interface 11 of the processor relates to USB and connects, via the extension modules and the connectors, to the program interface 51 of the program and debug interface 5.

The 12C peripheral interface 12 of the processor is a 2W 12C interface. It connects to said path, whereto a variety of slave devices can be attached (e.g., memory, IO expanders, displays, sensors, ADCs, DACs, a GNSS such as GPS). To communicate with these slave devices, the OS of the processor uses device drivers which may be supplied by the manufacturer of the slave device, without any driver modification being required, owing to the transparency enabled by the path realized according to the invention. To connect to said path, the 12C peripheral interface connects to a second static voltage offset means 16. This relates to a basic discrete conversion between the bidirectional open collector signals of the processor, provided at the 12C peripheral interface 12, and the 4W unidirectional signals 1200, 1200' carried over the path. Thereby, the two bidirectional signals relate to a data line and a clock line, driven by open collector outputs. On the other hand, the 4W unidirectional signal transmission may be described as a unidirectional push-pull interface for bridging longer distances while maintaining signal integrity, thereby enabling communication with the extension modules. For the path, only 1 signal is depicted (clock or data).

The UART peripheral interface 13 of the processor is a point-to-point interface that may be used to communicate with a variety of other devices or modules (e.g., GPS transceiver, RS232 interface transceiver, RS485 bus transceiver). It may also be used to communicate with a console to output debug information. When interfacing with third party devices or modules, drivers suitable for the OS, e.g., Linux OS, may conveniently be available from the provider.

The serial digital audio peripheral interface 14 of the processor may be set up according to different protocols (e.g., 12S, Left Justified (LJ), TDM). In this example, the interface is set up to 16-channel TDM providing interface possibilities with 16 digital audio inputs and 16 digital audio outputs. It comprises clock signals and data in- and output signals.

The SPI peripheral interface 15 of the processor relates to a bus whereto a variety of slave devices can be attached (e.g., memory, IO expanders, displays). To communicate with these devices, the OS, e.g., Linux OS, uses device drivers which may be conveniently supplied by the manufacturer of the slave device, without requiring any modification. The bus relates to a clock signal, data in- and output signals and a chip select line for each slave device connected on the bus. In examples, SPI peripheral interface is used for high bandwidth applications, as throughput may be higher than over the 12C interface 12.

Signals of the processor's program interface 11, 12C peripheral interface 12, UART peripheral interface 13, serial digital audio peripheral interface 14, and SPI peripheral interface 15 are carried between the application processor 10 and the extension modules 2 via connector 4, the first device on the path being the first extension module 2.

The first extension module 2 contains extra IO / functionality to attach to a base module. It is built around an FPGA 21 comprised in the extension module interfacing with the processor of the base module, on-board devices, user IO comprised in the extension module, and on-board devices and user IO comprised in the other extension modules.

The second extension module 3 may have the same hardware as the first or other to add different functionality. Additional extension modules can be connected in the same way, building a whole stack of modules. Thereby, different connectors 4 connect the base module and the first extension module to each other, the first to the next and so on, in a point-to point fashion. This connection is impedance-matched to optimise signal integrity.

Apart from said extra IO / functionality comprised in the extension module 2 to attach to the base module 1, the extension module and the second extension module may be essentially the same in terms of hardware. Software-wise, a difference lies in the instructions stored on the 12C EEPROM module 302a, 302a, allowing to dynamically configure the system, by means of the respective self-configuration engines 209a, 209b. Other respective extension modules (not shown) may also be present, which may also be essentially the same. The extension modules 2, 3 each have a respective local 12C module 204 connected to local 12C circuitry 30, 74 via a two wire, 2W, connection. Opposed to this, the respective 12C path sections are provided as four wire, 4W, connection. The local 12C modules 204 comprise a respective static voltage offset means 73 for converting between unidirectional signals carried over said path and bidirectional signals carried over said 2W connection toward the local 12C circuitry 30, 74.

The extension modules 2, 3 each have an 12C repeater module (not shown; shown on Fig. 2 120a, 120b) for unidirectional repeating of said unidirectional signals carried over said path being a 4W 12C path. This relates to respective submodules for MISO SDA; MOSI SDA; MISO SCL; and MOSI SCL.

The extension modules 2, 3 each comprise an address translation module 203 for providing address translation between a global address over said path 72 and a local 12C address for the local 12C circuitry 30, 74. Thereby, the address translation module 203 is a 4W module connected to the 12C path section and the local 12C module 204.

The extension modules 2, 3 each comprise an EEPROM module 302, being an 12C EEPROM module, comprising configuration instructions, as well as a self-configuration engine 209; and a plurality of modules that can be configured, in this example an address translation module 203, a TDM multiplexer module 208, an 12C IO extender 202, an SPI chip select module 205, a UART chip select module 206. The self-configuration engine 209 is configured to, upon a trigger for self-configuration, carry out the steps of: loading the configuration instructions from the EEPROM module; and configuring, based on the instructions, the configurable module, one of the configurable modules.

The extension modules 2, 3 each comprise a TDM multiplexer module 208; respective audio interfaces 140, 140' for connecting the TDM multiplexer module toward the application processor 10 and the further device 3; and an audio codec module 23, 24, particularly an 12S audio codec module, connected to said TDM multiplexer module. The TDM multiplexer module is configured for routing audio data between the audio interfaces 140, 140' and the audio codec module 23, 24 over a TDM time slot dedicated to said device 2, wherein preferably said TDM time slot is dedicated based on configuration instructions stored in an 12C EEPROM module 302 comprised in the device.

The extension modules 2, 3 each comprise an 12C IO extender 202; and user 12C IO circuitry 26 connected to said IO extender. Said IO extender comprises an IO extender output 260 and an IO extender input 270. The IO extender input comprises a debouncer. The IO extender is a 4W IO extender connected to said 12C path section via the address translation module 203. It provides address translation between a global address over said path and the local 12C address for the user 12C IO circuitry 26. In other examples (not shown), the 12C IO extender is not a 4W but a 2W IO extender belonging to the local 12C circuitry 30, 74 and interfacing with the address translation module 203 and the 12C path section via the local 12C module 204.

The extension modules 2, 3 each comprise an SPI chip select module 205; an SPI multiplexer module 201 connected to the SPI chip select module 205; local SPI circuitry 25 connected to said SPI multiplexer module 201; and respective SPI interfaces 140, 140' for connecting the SPI multiplexer module toward the application processor 10 and the further device 3. The SPI multiplexer module 201 is configured for routing SPI data between an SPI interface 140 and either the other SPI interface 140' or the SPI local circuitry 25. The routing of SPI data is based on a switching determined by the SPI chip select module 205, particularly on configuration instructions stored on an EEPROM module 302 comprised in the device.

The extension modules 2, 3 each comprise a UART chip select module 206; a UART multiplexer module 207 connected to the UART chip select module 206; local UART circuitry 22 connected to said UART multiplexer module 207; and respective UART interfaces 130, 130' for connecting the UART multiplexer module toward the application processor 10 and the further device 3. The UART multiplexer module 207 is configured for routing UART data between a UART interface 130 and either the other UART interface 130' or the UART local circuitry 22 based on a switching determined by the UART chip select module 206, particularly on configuration instructions stored on an EEPROM module 302 comprised in the device.

The extension modules 2, 3 each comprise an FPGA 21 that implements portions of the 12C path section and said 12C repeater module 120a, 120b. The same FPGA further comprises an address translation module 203, a TDM multiplexer module 208, an 12C IO extender 202, an SPI chip select module 205, a UART chip select module 206, a self-configuration engine 209. Thereby, said 12C repeater module 120a, 120b belonging to the FPGA 21 consists of respective submodules for MISO SDA, MOSI SDA, MISO SCL, and MOSI SCL. The modules 203, 208, 202, 205, 206 are configurable modules that are configured through respective configuration instructions stored in respective 12C EEPROM modules 302a, 302b comprised in the respective device. The configuration relates to a respective self-configuration engine 209 comprised in the respective device and configured to, upon a trigger for self-configuration, carry out the steps of: loading the configuration instructions from the respective 12C EEPROM module 302a, 302b; and configuring, based on the instructions, the respective configurable module. This relates to the ease of implementation of a variety of functions afforded by the FPGA, including the implementation of the self-configuration engine 209. This allows for a method wherein the entire system, including the base module 1 and the extension modules 2, 3, are configured at once. This configuration may start, e.g., at production of the modules, by storing adequate configuration instructions on the respective EEPROM module 302a, 302b of the respective extension modules 2,3. Either before but preferably after connecting the base module and the extension modules, the self-configuration engine 209 may receive a trigger for self-configuration, e.g., a power on; a hardware-based trigger (such as pushing a button provided on the device); or a software-based trigger (such as a signal from the EEPROM programming connector 301 or the application processor 10). Upon triggering, the self-configuration engine 209 may load the configuration instructions from the EEPROM module; and configure, based on the instructions, at least the address translation module 203, and additionally also the TDM multiplexer module 208 and/or the 12C IO extender 202 and/or the SPI chip select module 205 and/or the UART chip select module 206.

Furthermore, the FPGA 21 incorporates the interfacing functions between the extension interface from the processor on the base module, the extension interface to the next extension module and all the local slave devices. All signals go through the FPGA, by this repeating the signals, ensuring optimal signal integrity to the base module or every next extension module, enabling robust communication.

The extension modules 2, 3 furthermore comprise a local UART slave device or module 22, connected via a local UART interface 220. This can be, e.g., a GPS transceiver, an RS232 interface transceiver, an RS485 bus transceiver.

The extension modules 2, 3 also comprise a first and second 12S audio codec 23, 24, exchanging respective bidirectional signals 2300, 2400 with respective first and second local 12S interfaces 230, 240. They convert digital serial audio streams (industry standard 12S protocol) to analog audio and vice versa. Each 12S audio codec 23, 24 provides two analog mono inputs channels and two analog mono output channels.

The extension modules 2, 3 comprise a local SPI bus 25 connected via a local SPI interface 250. The local SPI bus 25 contains several slave devices or modules (e.g., memory, IO expanders, displays). The SPI signals can be routed from the processor on the base module by the dynamic SPI multiplexer module 201. The chip select signals selected with the SPI chip select module 205 are general purpose outputs of the 12C IO extender 202. The communication is transparent for the OS on the processor of the base module because any GPIO can be configured in the slave device's driver to be used as the chip select.

The extension modules 2, 3 furthermore each comprise local user IO 26. These are in- and outputs from the 12C IO extender 202, which can be used for external user IO or on-board control signals such as SPI slave device chip select signals. These IO can be set/read by the processor 10 of the base module through memory mapped IO as is common in many existing 12C IO extender IC's.

The extension modules 2, 3 comprise a local 12C bus 30 containing a number of slave devices or modules (e.g., memory, IO expanders, displays) and connected to the local 12C module 204 via a 2W connection 3000. Minimally an EEPROM module 302a, 302b and, in this example, an EEPROM programming connector 301 are present on the bus. The attached devices can be reached by the processor of the base module as if they were connected directly to the processor. The 12C address translation module 203 translates the addresses of the local slave devices to another address to make sure there are no address conflicts for the processor, even if the same address is used by slave devices on multiple extension modules attached to the same base module.

The extension modules 2, 3 furthermore each comprise an EEPROM programming connector 301 enabling to store the extension module's configuration in the EEPROM module 302 during extension module production, and the actual 12C EEPROM module 302a, 302b, each being 12C EEPROM slave devices. This memory device contains the extension module's configuration. It defines, first of all, the 12C address translation mask used by the 12C address translation module 203. It also defines the configuration for the SPI chip select module 205, ensuring the dynamic SPI multiplexer module 201 is switched to the local bus when a local SPI slave is addressed. Furthermore, it defines the configuration of the UART chip select module 206, ensuring the dynamic UART multiplexer module 207 is switched to the local UART when the local UART interface is addressed by setting a defined output of the 12C IO extender 202. It also defines the configuration of the static TDM multiplexer module 208, particularly the routing of the TDM slot to 12S slot multiplexing. It also defines specific configurations for the 12C IO extender 202 (e.g., debounce parameters, default output states).

The extension modules 2, 3 also comprise local 12C slave devices 303 (e.g., memory, IO expanders, displays).

The extension modules 2, 3 comprise a dynamic SPI multiplexer module 201. This is a 'switch' switching the SPI signals coming from the processor on the base module over the extension interface to either the local SPI bus, or the SPI interface to the next extension module. The switching is done by the SPI chip select module 205 based on the chip select 12C IO extender 202 output defined by the extension configuration in the 12C EEPROM 302a, 302b. This makes communication between processor and SPI slave device transparent for the OS run by the processor without any modification to the standard SPI slave device's device driver. If the local bus is not selected, the signals from the processor on the base module are routed to the next extension module.

The extension modules 2, 3 comprise an 12C IO extender 202. This function makes extra logic IO's available for the processor on the base module as it was a 12C slave device IO extender directly connected to the processor's 12C bus. The 12C address translation module 203 translates the addresses of this IO extender so the same FPGA implementation can be used on all extension modules attached to the same base module without the need for a specific address configuration for the 12C IO extender per extension module. The IO extender is implemented as memory mapped IO as is common in many existing 12C IO extender IC's. This makes the communication transparent for the OS on the processor of the base module without the need for specific custom device drivers (a generic one can be used). In examples, special features are added to this IO extender such as input debouncing 270 (parametrizable) with respect to input signals 2700 from user IO 26, and default output states 260 for output signals 2600 toward user IO 26. These special features can be configured during power-on by the self-configuration engine 209 defined by the extension configuration in the 12C EEPROM 302a, 302b.

The extension modules 2, 3 comprise an 12C address translation module 203. This function translates the address coming from the processor of the base module by means of X-OR-ing the received address bits with a mask, defined in the configuration instructions stored in the 12C EEPROM 302a, 302b. Doing so, the address translation module governs the access to the 4W path 72 and the 4W 12C interfaces 120, 120'. This happens on-the-fly, making it completely transparent for the processor. This means that any 12C slave device 303 on the extension modules appears to be attached on the processor's 12C interface itself (with a different address), enabling the use of the standard provided device drivers in the OS without alteration.

The extension modules 2, 3 comprise a local 12C module 204 for conversion between 4W unidirectional signals, according to a push-pull 12C interface, and normal 2W 12C bidirectional signals, according to bidirectional open collector set-up. This converts the unidirectional push-pull 12C interface of the extension interface to normal (2W bidirectional open collector) 12C conversion. This is partially implemented in the FPGA 21 and partially discrete. The local 12C module 204 uses static volage offset means to sense signal direction. This enables normal 12C devices to be attached to the FPGA on the extension module 21.

The extension modules 2, 3 comprise an SPI chip select module 205, also referred to as SPI chip select logic. This function switches the SPI multiplexer module 21 when required, e.g., when a slave device on the local SPI bus is to be addressed, thereby determining access to the SPI interfaces 150, 150'. This relates to the outputs 260 of the 12C IO extender 202, wherein the selection of which outputs to use is configured in the SPI chip select logic upon start-up by the self-configuration engine 209, based on the configuration instructions stored in the 12C EEPROM 302a, 302b.

The extension modules 2, 3 comprise a UART chip select module 206, also referred to as UART chip select logic. This function switches the UART multiplexer module 207 whenever a specific output from the 12C IO extender 202 is set, thereby determining access to the UART interfaces 130, 130'. Which output 260 from the 12C IO extender 202 is used is configured in the UART chip select logic upon start-up by the self-configuration engine 209, based on the extension configuration stored in the 12C EEPROM 302. Advantageously, to communicate with the UART slave device on a specific extension module, the processor 10 on the base module merely sets the corresponding output of the 12C IO extender 202. This enables using the standard provided UART device drivers in the OS.

The extension modules 2, 3 comprise a dynamic UART multiplexer module 207. This is a 'switch' switching the UART signals coming from the processor on the base module over the extension interface to either the local UART interface 220 or the UART interface 130' to the next extension module. The switching is done by the UART chip select module 206 based on the output 260 of the chip select 12C IO extender defined by the extension configuration in the 12C EEPROM 302. This makes communication between processor and UART slave device transparent for the OS run by the processor without any modification to the standard UART slave device's device driver. If the local interface is not selected, the signals from the processor on the base module are routed to the next extension module (e.g., pass-through of processor's debug information).

The extension modules 2, 3 comprise a static TDM multiplexer module 208. This function implements a 'switch', routing data from any of the 16 TDM slots comprised in the multiplexed audio signals 1400, 1400' coming from the processor on the base module, via the TDM audio interfaces 140, 140', to the respective 12S output signals and channels as defined by the extension configuration in the 12C EEPROM 302. The data signal 1400, 1400' from the processor to the extension modules (for the digital-to-analog converters) is also 1:1 available for the next extension module, making it possible to use the same signal on multiple extension modules without increasing the throughput. In the other direction (signals from analog-to-digital converters), data from any of the 12S input signals and channels can be routed to respective TDM slots, to be received by the processor 10 on the base module as defined by the extension configuration in the 12C EEPROM 302. The TDM slots not used by local 12S signals are filled with the data on the respective TDM slots from the next extension module. This function is configured upon start-up by the self-configuration engine 209.

The extension modules 2, 3 comprise a self-configuration engine 209. This state machine foresees in the configuration of some extension module specific functionality. At start-up, the Self configuration engine 209 reads out the 12C EEPROM 302 memory content. It uses this data to configure which 12C IO extender 202 output is used as chip select for the local SPI slave devices 25 or UART slave device 22 used by the SPI and UART multiplexer module 205, 206. It furthermore uses the data to configure specific parameters of the 12C IO extender 202, such as input debouncing parameters and default output states. It furthermore defines masks for the 12C address translation module 203, as well as configuration parameters for the TDM multiplexer module 208. This makes it possible to reuse the complete FPGA design without any alteration on different extension modules and even attaching multiple extension modules with the exact same hardware to a base module, by only changing the content of the EEPROM memory.

### Example 2: second example device and system according to the invention

This example relates to Figure 2, showing a second example device 2 according to the invention, relating to a second example system (not shown) according to the invention.

The example device and system are similar to those of Example 1, and the example device may be used in either the first example system or the second example system. Conversely, in example variants, the example device of Example 1 may be used in each of the first or second example system. In this regard, the correspondence in reference numerals with Example 1 is provided for the sake of clarity yet is not to be construed as limiting this Example in any way, as Example 2 and Example 1 may relate to different example embodiments.

Particularly, Figure 2 illustrates the device 2, which may be the extension module 2 of Example 1, thereby only showing interfaces and modules relating to 12C signals and TDM audio data. Thereby, the 12C path sections and the path consists of two respective 4W 12C routes 1200a-1200a' and 1200b-1200b', each provided with a respective 12C repeater module 120a, 120b, a respective 12C address translation module 203a, 203b connected thereto, and a respective local I2C module 204a, 204b. The latter connect between the respective address translation module 204a, 204b and respective 2W local 12C circuitry 303, 302a, 302b connected on a 2W 12C local line or bus 3000a, 3000b, for converting between 4W unidirectional signals from the address translation module and 2W bidirectional signals for the 2W 12C local line or bus 3000a, 3000b. Thereby, the first respective route 1200a-1200a' is for control (e.g., temperature sensor reading, EEPROM programming, audio codec configuration), and connects to miscellaneous 12C devices 303 at relatively lower speed. The second respective route 1200b-1200b' is for relatively higher speed, i.e., for speed IO, with an interrupt line, where specific IO's can subscribe to via the GPIO 2600, 2700, being a twenty wire line, connected to the route via an 12C IO extender with debouncing 202b. Also said 2W local 12C circuitry may relate to higher speeds, such as the EEPROM module 302a, 302b.

The TDM-related module 208a illustrated in Figure 2 may relate to the combination of the TDM multiplexer module 208 and the 12S interfaces 230, 240 of Example 1, connecting to 4W lines 1400, 1400' carrying 16 multiplexed channels, on the one hand, and two 2W lines 2300, 2400 for 12S audio data.

### Example 3: third example device and system according to the invention

This example relates to Figure 3, showing a third example device being an extension module 2 as part of an example system according to the invention. As shown, the system further comprises a further example device being a further extension module 3, and a base module 1 comprising the application processor 10.

The example device and system are similar to those of Example 1 and 2, so the example device may be used in any of the first, second or third example system or the second example system. Conversely, in example variants, the example device of Example 1 or 2 may be used in any of the first, second or third example system, with correspondence in reference numerals provided merely for the sake of clarity, and not to be construed as limiting.

Particularly, Example 3 highlights, through the example set-up of Figure 3, how a 4W-based 12C distribution means 7, relating to the devices and systems of Example 1 and 2, provides a transparent 2W 12C connection between a processor 10 and multiple 12C slave devices 303, without the processor 10 and the slave devices 303 being aware of the 12C distribution means 7 being 4W-based.

As illustrated, this requires a processor-side conversion 71 between 2W and 4W, on the one hand, and a device-side conversion 73 between 4W and 2W, on the other hand, and the 4W path 72 connecting them. This relates to a respective second static voltage offset (SVO) means 71, corresponding to reference numeral 16 in Example 1, and a (first) static voltage offset means 73, roughly corresponding to the local 12C module 204 in Example 1.

In its interaction with the 12C distribution means 7, the processor 10 takes up the role of 12C master 70. The 2W signals originating from the processor are converted to 4W with the processor-side conversion 71 that comprises discrete components, amounting to second SVO means 71. In essence, a single transistor per 12C line, and thus two transistors to go from 2W to 4W, suffices. The processor and the processor-side conversion reside in the base module 1. The path 72 carries unidirectional 12C 4W signals across the different extension modules 2, 3, hence residing in each of these modules, and the connectors therebetween. The device-side conversion 73 resides within the respective extension modules 2, 3, and comprises some logic belonging to the FPGA 21, on the one hand, and discrete components for implementing a comparator outside of the FPGA 21, as illustrated on Figure 3. Thereby, the FPGA also houses the address translation module 203, being integrated with the circuit portions responsible for device-side conversion 73. The slave device 303, finally, interacts with the 12C distribution means in the role of 12C slave, typically with open drain output. The respective slave devices 303 reside on respective extension modules 2, 3.

As illustrated in Figure 3, the FPGA further comprises unidirectional buffers for connecting to the unidirectional signals on the path 72; thereby unidirectional buffers of the first extension module 2 may be different from those of further extension modules 3.

(End of Example 3)

## Claims

1. A device (2) comprising:
an 12C path section for realizing a path (72) toward an application processor (10) and a further device (3);
a local 12C module (204) connected to local 12C circuitry (30, 74) via a two wire, 2W, connection;
wherein the 12C path section is provided as four wire, 4W, connection;
wherein the local 12C module (204) comprises a static voltage offset means (73) for converting between unidirectional signals carried over said path (72) and bidirectional signals carried over said 2W connection toward the local 12C circuitry (30, 74).

2. Device (2) of claim 1, further comprising:
an 12C repeater module (120a, 120b) for unidirectional repeating of said unidirectional signals carried over said path (72) being a 4W 12C path, preferably relating to respective submodules for: master in slave out, MISO, serial data, SDA; master out slave in, MOSI, SDA; master out slave in, MISO, serial clock, SCL; and MOSI SCL.

3. Device (2) of claim 1 or 2, further comprising:
an address translation module (203) for providing address translation between a global address over said path (72) and a local 12C address for the local 12C circuitry (30, 74).

4. Device (2) of claim 3, wherein the address translation module (203) is a 4W module connected to the 12C path section and the local 12C module (204).

5. Device (2) of any of claims 3-4, further comprising:
an 12C IO extender (202);
user 12C IO circuitry (26) connected to said IO extender;
wherein said IO extender comprises an IO extender output (260) and an IO extender input (270), preferably an IO extender input comprising a debouncer;
wherein said IO extender is a 4W IO extender connected to said 12C path section via the address translation module (203) for providing address translation between a global address over said path (72) and the local 12C address for the user 12C IO circuitry (26).

6. Device (2) of any of claims 1-5, further comprising:
an EEPROM module (302), preferably an 12C EEPROM module, comprising configuration instructions;
a self-configuration engine (209);
a configurable module (203, 208, 202, 205, 206);
wherein the self-configuration engine (209) is configured to, upon a trigger for self-configuration, carry out the steps of:
loading the configuration instructions from the EEPROM module; and
configuring, based on the instructions, the configurable module, the configurable module preferably relating to one or more of: an address translation module (203), a TDM multiplexer module (208), an 12C IO extender (202), an SPI chip select module (205), a UART chip select module (206).

7. Device (2) of any of claims 1-6, further comprising:
a TDM multiplexer module (208);
respective audio interfaces (140, 140') for connecting the TDM multiplexer module toward the application processor (10) and the further device (3);
an audio codec module (23, 24), preferably an 12S audio codec module, connected to said TDM multiplexer module;
wherein the TDM multiplexer module is configured for routing audio data between the audio interfaces (140, 140') and the audio codec module (23, 24) over a TDM time slot dedicated to said device (2), wherein preferably said TDM time slot is dedicated based on configuration instructions stored in an 12C EEPROM module (302) comprised in the device.

8. Device (2) of any of claims 1-7, further comprising:
an SPI chip select module (205);
an SPI multiplexer module (201) connected to the SPI chip select module (205);
local SPI circuitry (25) connected to said SPI multiplexer module (201);
respective SPI interfaces (140, 140') for connecting the SPI multiplexer module toward the application processor (10) and the further device (3);
wherein the SPI multiplexer module (201) is configured for routing SPI data between an SPI interface (140) and either the other SPI interface (140') or the SPI local circuitry (25) based on a switching determined by the SPI chip select module (205), wherein preferably said switching is based on configuration instructions stored on an EEPROM module (302) comprised in the device.

9. Device (2) of any of claims 1-8, further comprising:
a UART chip select module (206);
a UART multiplexer module (207) connected to the UART chip select module (206);
local UART circuitry (22) connected to said UART multiplexer module (207);
respective UART interfaces (130, 130') for connecting the UART multiplexer module toward the application processor (10) and the further device (3);
wherein the UART multiplexer module (207) is configured for routing UART data between a UART interface (130) and either the other UART interface (130') or the UART local circuitry (22) based on a switching determined by the UART chip select module (206), wherein preferably said switching is based on configuration instructions stored on an EEPROM module (302) comprised in the device.

10. Device (2) of any of claims 2-9, wherein at least said 12C path section and said 12C repeater module (120a, 120b) are comprised in a same FPGA (21) belonging to the device,
wherein preferably the same FPGA further comprises one or one or more of, more preferably comprises each of: an address translation module (203), a TDM multiplexer module (208), an 12C IO extender (202), an SPI chip select module (205), a UART chip select module (206), a self-configuration engine (209).

11. Device (2) of claim 10, wherein said 12C repeater module (120a, 120b) belonging to the FPGA (21) consists of respective submodules for MISO SDA, MOSI SDA, MISO SCL, and MOSI SCL.

12. A system comprising:
a base module (1) comprising:
· an application processor (10) comprising a two wire, 2W, 12C interface (12);
· second static voltage offset means (16, 71) for converting between bidirectional signals of said 2W 12C interface (12) of the application processor (10) and 4W unidirectional signals;
one or more devices (2, 3), preferably each device being according to any of claims 1-10, each device comprising:
· a 4W 12C path section for realizing a path (72) toward the 4W unidirectional signals originating from the application processor (10) and another one of the one or more devices (3);
· a local 12C module (204) connected to local 12C circuitry (30, 74) via a two wire, 2W, connection, comprising a static voltage offset means (73) for converting between the 4W unidirectional signals carried over said path (72) and bidirectional signals carried over said 2W connection toward the local 12C circuitry (30, 74).

13. System of claim 12, comprising at least two respective devices each comprising a respective same configurable module (203, 208, 202, 205, 206) each configured through respective configuration instructions stored in respective 12C EEPROM modules (302a, 302b) comprised in the respective device.

14. System of claim 13, wherein said configuration relates to a respective self-configuration engine (209) comprised in the respective device and configured to, upon a trigger for self-configuration, carry out the steps of:
loading the configuration instructions from the respective 12C EEPROM module (302a, 302b); and
configuring, based on the instructions, the respective configurable module.

15. Method for configuring a system comprising a base module (1) and one or more devices (2, 3) each comprising a configurable module (203, 208, 202, 205, 206) and a self-configuration engine (209); preferably the system of any of claims 12-14, the method comprising the steps of:
providing, to each of the devices (2, 3), different respective configuration instructions for storage on a respective EEPROM module (302a, 302b) comprised in the respective device (2,3),
connecting a 4W path section of the first device (2) to the base module (1), and each 4W path section of the respective further device (3) to the 4W path section of the respective previous device (2), so that a path (72) is realized toward an application processor (10) comprised in the base module (1); said path relating to second static voltage offset means (16, 71) comprised in the base module (1) that convert between 4W unidirectional signals of the path and bidirectional signals of an 2W 12C interface (12) of the application processor (10);
have the self-configuration engine (209), based upon a trigger for self-configuration, carry out the steps of:
· loading the configuration instructions from the EEPROM module; and
· configuring, based on the instructions, the configurable module, the configurable module preferably relating to one or more of: an address translation module (203), a TDM multiplexer module (208), an 12C IO extender (202), an SPI chip select module (205), a UART chip select module (206).
